# EUROPÄISCHE PATENTANMELDUNG

(11) **EP 3 246 200 A1**
(43) Veröffentlichungstag der Anmeldung: **22.11.2017**
(21) Anmeldenummer: 17171306.8
(22) Anmeldetag: 16.05.2017
(51) Int. Cl.: B60P 1/52, B62B 1/10, B66F 9/075, B62B 5/00, B65G 67/20

(54) **VERLADEVORRICHTUNG**

(30) Priorität: 17.05.2016 CH 6312016
(71) Anmelder: Hanniske, Kurt, 15738 Zeuthen (DE)
(72) Erfinder: Hanniske, Kurt, 15738 Zeuthen (DE)
(74) Vertreter: Riederer Hasler & Partner Patentanwälte AG

(57) **Zusammenfassung**

Die Erfindung betrifft eine Verladevorrichtung (11) zum Ein- und Ausladen einer Last (12) in ein bzw. aus einem Transportfahrzeuges (13) und zum Transportieren einer Last (12) umfassend eine Rahmenkonstruktion (15) mit einer Vorderseite (17), welche beim Ein- und Ausladen dem Transportfahrzeug (13) zugewandt ist und einer Rückseite (19), welche beim Ein- und Ausladen dem Transportfahrzeug (13) abgewandt ist, wenigstens drei Transporträder (37,39), welche an der Rahmenkonstruktion (15) befestigt sind und eine Haltevorrichtung (Seilzug, oder Kettenhubzug) zur Halterung der Last (12) an der Verladevorrichtung (11). Wenigstens ein unter Last höhenverstellbares Stützrad ist an der Rückseite (19) angeordnet. Die Höhe des Stützrades ist derart einstellbar, dass beim Ein- und Ausladen die Unterseite des wenigstens einen Stützrades tiefer als die Unterseite der Transporträder (37,39) ist und die Höhendifferenz zwischen der Unterseite der Transporträder (37,39) und der Unterseite des Stützrades im Wesentlichen der Höhe einer Ladefläche entspricht.

## Beschreibung

### Gebiet der Erfindung

Die Erfindung betrifft eine Verladevorrichtung zum Ein- und Ausladen einer Last gemäss Oberbegriff des Anspruchs 1.

### Stand der Technik

Zum Wegführen und Heranführen an Transportfahrzeuge und zum Beladen und Entladen selbiger sind Hilfsvorrichtungen notwendig, da Personen schwere Lasten ohne Hilfsmittel nicht verladen können.

Derartige Hilfsvorrichtungen sind oftmals mit dem Transportfahrzeug verbunden. In der WO 2006/122336 ist beispielsweise ein Anhänger offenbart, auf welchem eine Art Gabelstapler auf dessen Ladefläche angeordnet ist. Der Gabelstapler lässt sich auf der Ladefläche bewegen und auf Bodenniveau absenken. Eine Palette, welche heckseitig an dem Anhänger steht, kann daher mit dem Gabelstapler angehoben werden und auf die Ladefläche bis zum vorderen Ende gezogen werden.

Bekannt sind auch Kräne oder Hebelkonstruktionen, welche fest mit Kleintransportern verbunden sind und das Beladen und Entladen der Kleintransporter ermöglichen. Diese Vorrichtungen benötigen jedoch eine Energieversorgung, beispielsweise einen Anschluss an ein Stromnetz oder ein Hydrauliksystem und sind zudem aufwendig konstruiert. Ein Wechsel einer solchen Ladevorrichtung auf einen anderen Kleintransporter ist nahezu unmöglich. Die bekannten Ladevorrichtungen können ausserhalb des Fahrzeuges nur auf festem Untergrund, beispielsweise Betonflächen, verwendet werden.

### Aufgabe der Erfindung

Aus den Nachteilen des beschriebenen Stands der Technik resultiert die die vorliegende Erfindung initiierende Aufgabe eine gattungsgemässe Ladevorrichtung weiterzuentwickeln, welche einfach konstruiert ist und nicht an ein Transportfahrzeug gebunden ist. Zudem soll die Ladevorrichtung von einer einzelnen Person mit geringem Kraftaufwand bedient werden können. Noch ein Ziel ist es, dass die Ladevorrichtung für ihren Einsatz keine Energieversorgung benötigt.

### Beschreibung

Bei einer gattungsgemässen Ladevorrichtung ist wenigstens ein unter Last höhenverstellbares Stützrad an der Rückseite angeordnet, dessen Höhe derart einstellbar ist, dass beim Ein- und Ausladen die Unterseite des wenigstens einen Stützrades tiefer als die Unterseite der Transporträder ist und die Höhendifferenz zwischen der Unterseite der Transporträder und der Unterseite des Stützrades im Wesentlichen der Höhe einer Ladefläche entspricht. Die Stützrad-Konstruktion führt dazu, dass eine Last mit einer einfachen Rahmenkonstruktion in ein Transportfahrzeug oder einen Anhänger mit Ladefläche eingeladen werden kann und aus diesem ausgeladen werden kann.

Die Lösung der gestellten Aufgabe gelingt bei einer Verladevorrichtung dadurch, dass das wenigstens ein Stützrad an der Rückseite lösbar befestigt ist. Bevorzugt ist das Stützrad an der Rückseite ansteckbar. Das Stützrad kann beim Einladen der Last abgenommen werde, wodurch die Ladevorrichtung weiter nach vorne auf der Ladefläche geschoben werden kann. Wird die Last entladen, so dient die Ladevorrichtung nach Abnahme des Stützrades dazu die Last am Boden von dem Fahrzeug weg zu transportieren oder zu diesem hin zu transportieren. Das Stützrad dient dazu die Ladevorrichtung zu stützen und verschieben zu können, wenn sich die vorderen Transporträder auf der Ladefläche befinden, die hinteren Transporträder aber noch nicht über der Ladefläche angelangt sind. Die Vorderseite ist frei von Stützrädern. Dadurch ist die Verladevorrichtung besonders einfach ausgeführt. Anstatt die Vorderseite mit Stützrädern zu versehen, ist es vorgesehen die Verladevorrichtung ohne Last teilweise auf die Ladefläche zu heben und ohne Last von der Ladefläche herunter zu heben, um die Ladevorrichtung auf die Ladefläche und von der Ladefläche zu bekommen. Die Verstelltbarkeit des Stützrades unter Last ermöglicht es, dass die hinteren Transporträder lastfrei sind und erst belastet werden, wenn sich unter ihnen die Ladefläche befindet. Dann kann das Stützrad lastfrei gemacht werden und von der Rückseite der Rahmenkonstruktion abgenommen werden. Es bedarf daher keiner weiteren Mechanik und keines weiteren Antriebes, um das Stützrad auf Ladeflächenniveau anzuheben, wie dies aus dem Stand der Technik bekannt ist.

Als besonders vorteilhaft erweist es sich, wenn die Verladevorrichtung beim Ein- und Ausladen der Last manuell und ausschliesslich frei von der Last auf die Ladefläche hebbar ist und von der Ladefläche herunterhebbar ist. Die Last wird immer zuerst am Boden vor der Ladefläche abgesetzt. Dann kann die Verladevorrichtung mit den vorderen Transporträdern auf die Ladefläche gehoben werden und das wenigstens eine Stützrad wird montiert. Erst dann wird die Last mit der Verladevorrichtung wieder angehoben. Dadurch, dass die Verladevorrichtung manuell auf die Ladefläche hebbar ist und manuell von dieser herunterhebbar ist, ist die Verladevorrichung sehr einfach aufgebaut Auf weitere komplizierte und teure Hebevorrichtungen, welche das Anheben der Last samt der Verladevorrichtung auf die Höhe der Ladefläche ermöglichen, kann daher verzichtet werden.

Zweckmässigerweise weist die Verladevorrichtung ein Gesamtgewicht von höchstens 120 kg, bevorzugt von höchstens 100 kg und bevorzugt von höchstens 85 kg auf. Das geringe Gesamtgewicht der Verladevorrichtung führt dazu, dass die Verladevorrichtung ohne eine angehobene Last manuell, beispielsweise durch eine Person, auf die Ladefläche gehoben werden kann. Weitere Hebemittel, welche beispielsweise pneumatisch oder elektrisch angetrieben werden müssen, sind nicht notwendig. Die Verladevorrichtung kann daher überraschend einfach und mit geringem technischem Aufwand aufgebaut sein. Das Konzept der Verladevorrichtung zielt darauf ab, möglichst wenige Handgriffe zum Heben der Last auf die Ladefläche zu benötigen. Die Verladevorrichtung ist möglichst leicht und einfach und dementsprechend kostengünstig aufgebaut. Trotzdem ermöglicht es die Ladevorrichtung Lasten von bis zu 1050 kg auf die Ladefläche zu laden und von dieser zu entladen.

In einer besonders bevorzugten Ausführungsform der Erfindung umfasst die Verladevorrichtung ein erstes Seitenteil und ein zweites Seitenteil, welche durch Querstreben lösbar miteinander verbunden sind. Die Verladevorrichtung ist durch diese geringe Anzahl an Konstruktionselementen einfach aufgebaut und dementsprechend kostengünstig herstellbar. Ferner ist die Ladevorrichtung rasch zerlegbar und platzsparend transportierbar. Der einfache Aufbau führt zu einem geringen Eigengewicht von ca. 85 bis 100 kg, wobei die Ladevorrichtung trotz des geringen Eigengewichtes dazu geeignet ist Lasten bis zu 1050 kg ein- und ausladen zu können.

Als zweckdienlich hat es sich erwiesen, wenn an dem ersten und zweiten Seitenteil jeweils ein erstes und ein zweites Transportrad und ein Stützrad befestigt sind, wobei das Stützrad ausserhalb der Transporträder an der Rückseite des ersten oder zweiten Seitenteils angeordnet ist. Durch das Vorsehen von vier Transporträdern und 2 Stützrädern ist die Ladevorrichtung während des Ein- und Ausladens und des Transportierens wackelfrei und mit Lasten über 1000 kg belastbar. Die Transporträder und die Stützräder sind in ihrem Durchmesser derart dimensioniert, dass Lasten bis zu 1050 kg verschiebbar sind und die Räder leicht abrollen. Die Stützräder können auch als Zwillingsräder ausgeführt sein.

Zweckmässigerweise ist das wenigstens eine Stützrad mit einer manuell bedienbaren Spindel höhenverstellbar. Die Ladevorrichtung ist energieautark. Die Spindel ermöglicht es, wenn es der Ein- und Ausladevorgang erfordert, entweder die hinteren Transporträder oder die Stützräder lastfrei zu machen.

Die Erfindung zeichnet sich auch bevorzugt dadurch aus, dass die Haltevorrichtung und der Hebevorgang mit eine Seilwinde realisiert sind, an welcher eine Last relativ zu der Verladevorrichtung vertikal anhebbar und absenkbar ist. Die Seilwinde ermöglicht es, die Last auf einfache und zuverlässige Weise anzuheben und abzusenken. Zum einen wird die Seilwinde benutzt, damit die Last an der Verladevorrichtung gehalten ist. Während des Transportierens am Boden und auf der Ladefläche lässt sich die Last geringfügig anheben, um verschiebbar zu werden. Zum Anheben der Last auf Ladeflächenniveau und zum Absenken der Last von der Ladefläche auf den Boden dient die Seilwinde ebenfalls. Denkbar ist auch die Verladevorrichtung zum Absenken von Lasten in einen Schacht, beispielsweise in einen Kanalschacht, zu verwenden. Anstatt der Seilwinde kann auch ein Kettenhubzug mit einer Hebelübersetzung verwendet werden, welcher die Welle antreibt. Denkbar sind auch andere Hebehilfsmittel, welche über eine mechanische Übersetzung die Welle drehen. Von Vorteil ist es wenn der Betätigungshebel des Hebehilfsmittels zum Heben und Senken der Last an der Rahmenkonstruktion während der Betätigung seitlich nach Innen angebracht ist. Dadurch ist das Hebehilfsmittel auch bei beengten Platzverhältnissen, wie sie beispielsweise in einem Laderaum eines Kastenwagens herrschen, betätigbar.

In einer weiteren Ausführungsform der Erfindung umfassen die Querstreben einen vorderen und einen hinteren Rangierbügel, einen mittleren Querstabilisator und eine Welle, welche Welle Teil der Haltevorrichtung ist. Durch die Mehrzahl von Querstreben ist die Rahmenkonstruktion ausreichend stabil um Lasten von über 1000 kg zu verladen. Die Rangierbügel erleichtern den Verschub der Verladevorrichtung. Denkbar ist, dass die Rangierbügel an verschiedenen Positionen an den Seitenteilen montierbar sind und dadurch höhenverstellbar sind.

Als vorteilhaft erweist es sich, wenn Zugmittel an der Welle an ihren Enden und ihrer Mitte gehalten und aufgerollt werden können. Zum Anheben einer Palette ist es beispielsweise zweckmässig an den Enden der Welle jeweils zwei Gurte als Zugmittel zu verwenden, welche an ihren der Last zugewandten Enden einen Haken aufweisen können. Dadurch kann jede Ecke der Palette mit einem Gurt verbunden sein. Soll eine Last mittig angehoben werden, dann kann ein Zugmittel in der Mitte der Welle auf- und abgerollt werden. Die Zugmittel können auch Schlaufen sein, deren Enden an den beiden Enden der Welle auf- und abgewickelt werden. Dadurch lassen sich auch landwirtschaftliche Güter wie Heu- oder Siloballen mit der Verladevorrichtung ein- und ausladen.

In einer besonders bevorzugten Ausführungsform der Erfindung sind das erste und zweite Seitenteil jeweils aus drei Profilrohren zu einem Dreieck mit einer vorderen, einer hinteren und einer oberen Ecke aufgebaut. Die dreieckige Gestaltung führt zu einem stabilen Rahmenteil und die Spitze des Dreiecks bietet sich zur Anordnung der Welle an. Die Enden der unteren Profilrohre können dazu verwendet werden die Stützräder und die Rangierräder aufzustecken.

Zweckmässigerweise ist der vordere Schenkel des Dreiecks länger als der hintere Schenkel des Dreiecks. Die Position der Welle lässt sich durch Wahl der Länge der Schenkel nach vorne oder hinten verlagern. Der Gesamtschwerpunkt von Last und Verladevarrichtung kann in Richtung der Rückseite verschoben werden, wodurch die Vorrichtung einfacher zu steuern ist, wenn sie am Boden verschoben wird.

In einer weiteren besonders bevorzugten Ausführungsform ist an der Vorderseite ein schwenkbares Rangierrad ansteckbar. Bevorzugt ist die Unterseite des Rangierrades etwas tiefer angeordnet als die Unterseite des vorderen Transportrades. Dadurch ist das vordere Transportrad um 3 bis 5 cm angehoben, wenn das Rangierrad aufgesteckt ist. Die Verstellung des Rangierrades in Verschieberichtung der Verladevorrichtung kann dadurch erleichtert erfolgen. Zweckmässigerweise ist das Rangierrad an der vorderen Ecke des Dreiecks aufgesteckt.

Dadurch, dass an der oberen Ecke des Dreiecks ein Lagerbock angeordnet ist, in welchem die Welle drehbar aufgenommen ist, ist die Welle an der Spitze des Dreiecks am höchsten Punkt angeordnet. Bei Zerlegung der Verladevorrichtung muss die Welle lediglich aus den beiden Lagerböcken gezogen werden und behindert eine rasche Zerlegung der Verladevorrichtung nicht.

In einer weiteren besonders bevorzugten Ausführungsform der Erfindung umfasst die Verladevorrichtung ein erstes und zweites Paar von Laufschienen, wobei das erste Laufschienenpaar Mittel zur Halterung an einer Ladefläche aufweist. Das erste Paar von Laufschienen ermöglicht das erleichterte Verschieben der Verladevorrichtung samt Last auf der Ladefläche. Damit die Ladeschienen durch die grosse Last nicht verrückt werden, sind sie an der Ladefläche, beispielsweise durch Vorsprünge gehalten. Die zweiten Laufschienen ermöglichen das Verschieben der Verladevorrichtung auch auf weichem Untergrund, damit die Räder nicht in dem Untergrund versinken.

Zweckmässigerweise umfasst die Verladevorrichtung erste vordere und zweite hintere Transporträder und die Halterungen der ersten Transporträder weisen erste Vorsprünge auf, welche mit Vorsprüngen am ersten Paar von Laufschienen zusammenwirken, um eine Abrollsicherung für die Ladevorrichtung zu bilden. Die Abrollsicherung bewirkt, dass die Rahmenkonstruktion nicht ungewollt von den ersten Laufschienen abrollt und von der Ladefläche fällt. Die Vorsprünge an den Laufschienen können rampenförmig ausgebildet sein, damit die ersten Vorsprünge in Verladerichtung auf die Ladefläche erleichtert über die zweiten Vorsprünge gleiten, in Gegenrichtung jedoch einen Anschlagpunkt für die ersten Vorsprünge bilden. Die ersten Vorsprünge können auch als U-Bügel ausgebildet sein, welche durch die rampenförmigen Vorsprünge in Verladerichtung nach oben bewegt werden können und über die zweiten Vorsprünge gleiten. In der Gegenrichtung werden die U-Bügel von den zweiten Vorsprüngen nach unten gedrückt und bilden den erwünschten Anschlagpunkt, damit die Rahmenkonstruktion auf den ersten Laufschienen nicht abrollen kann. Der U-Bügel kann an seiner die Schenkel verbindenden Unterseite mit einer Rolle ausgestattet sein.

In einer weiteren bevorzugten Ausführungsform sind oberhalb der zweiten Transporträder bewegliche Bügel angeordnet, welche mit an den Laufschienen vorgesehenen zweiten Vorsprüngen zusammenwirken, um eine zweite Abrollsicherung zu realisieren.

Weitere Vorteile und Merkmale ergeben sich aus der nachfolgenden Beschreibung eines Ausführungsbeispiels der Erfindung unter Bezugnahme auf die schematischen Darstellungen. Es zeigen in nicht massstabsgetreuer Darstellung:
- Figur 1:: eine axonometrische Ansicht einer Verladevorrichtung mit einer angehobenen Last zur Be- und Entladung eines Transportfahrzeuges;
- Figur 2:: eine axonometrische Ansicht der Verladevorrichtung ohne eine Last;
- Figur 3:: eine axonometrische Ansicht der Verladevorrichtung beim Herausziehen der Verladevorrichtung aus dem Transportfahrzeug;
- Figur4:: eine axonometrische Ansicht der Verladevorrichtung umgebaut zum Transportieren in der Ebene und
- Figur 5:: eine Detailansicht der Verladevorrichtung mit aufgesteckten Rangierrädern zum Transportieren einer Last in der Ebene.

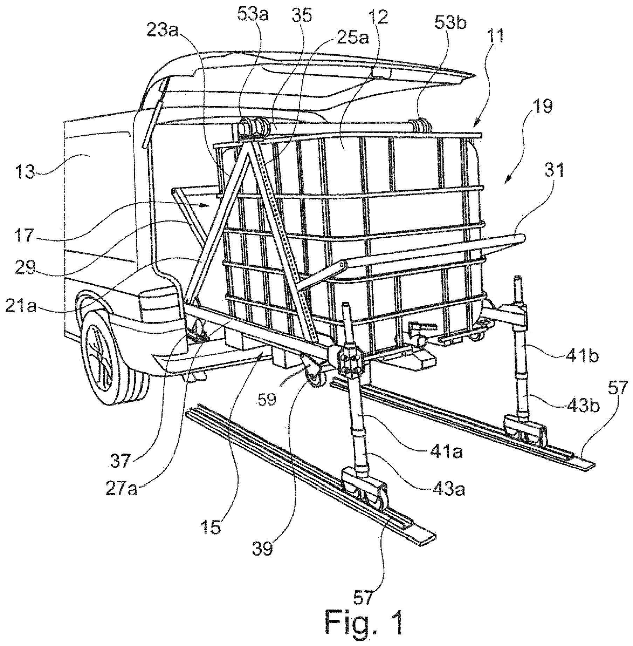

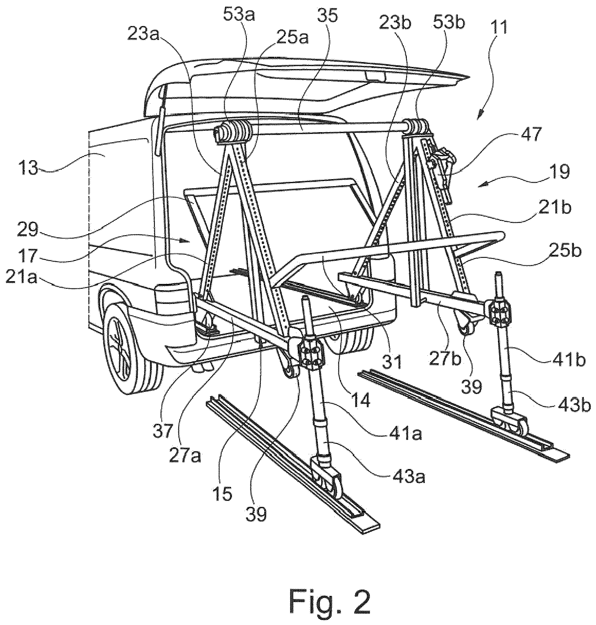

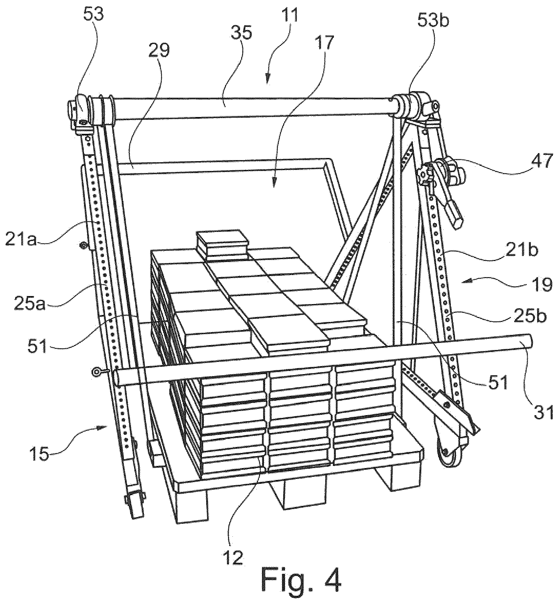

In den Figuren 1 bis 4 ist eine Verladevorrichtung gezeigt, welche gesamthaft mit dem Bezugszeichen 11 bezeichnet ist. Die Verladevorrichtung dient dem Ein- und Ausladen einer Last 12 in und aus einem Transportfahrzeug 13. Die Verladevorrichtung ist besonders gut für Transportfahrzeuge geeignet, deren Ladefläche 14 weniger als 75 cm über dem Boden ist. Dies gilt beispielsweise für Kasten- oder Pritschenwägen, aber auch für Anhänger.

Die Verladevorrichtung 11 ist aus einer Rahmenkonstruktion 15 aufgebaut. Die Rahmenkonstruktion hat eine Vorderseite 17 und eine Rückseite 19. Die Vorderseite 17 ist beim Ein- und Ausladen dem Fahrzeug 13 zugewandt und die Rückseite 19 ist beim Ein- und Ausladen dem Fahrzeug 13 abgewandt. Die Vorrichtung 11 umfasst ein erstes Seitenteil 21a und ein zweites Seitenteil 21b. Die Seitenteile 21a,21b sind aus einem vorderen, hinteren und unteren Profilrohr 23a,23b,25a,25b und 27a,27b jeweils zu einem Dreieck aufgebaut, wobei die Profilrohre den Schenkeln des Dreiecks entsprechen.

Das erste und das zweite Seitenteil 21a,21b sind durch Querstreben lösbar miteinander verbunden. Die Seitenteile 21a,21b können manuell von den Querstreben gelöst werden, wodurch die Vorrichtung 11 rasch zerlegbar und wieder aufbaubar ist. Die Querstreben umfassen einen vorderen und hinteren Rangierbügel 29,31, einen mittleren Querstabilisator 33 und eine Welle 35. Die Rangierbügel erleichtern es die Vorrichtung 11 zu ziehen oder zu schieben. Die Welle 35 ist Teil einer Haltevorrichtung zur Halterung der Last 11 an der Rahmenkonstruktion 15, welche weiter untenstehend beschrieben ist.

An den unteren Profilrohren bzw. Schenkeln 27a,27b sind jeweils ein erstes und ein zweites Transportrad 37,39 befestigt. Die Transporträder sind derart dimensioniert, dass sie Lasten 12 von bis zu 1050 kg tragen und dabei rollbar bleiben. Die Rahmenkonstruktion 15 rollt auf den Transporträdern 37,39 auf der Ladefläche 14 des Transportfahrzeugs 13 und in der Ebene zum Abtransport und zum Hintransport der Last 12 von und zu dem Transportfahrzeug 13.

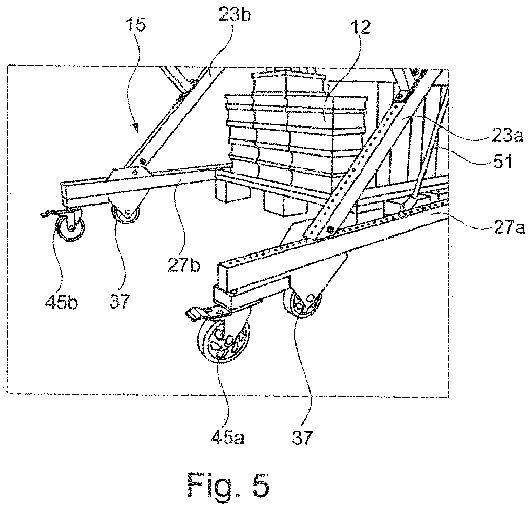

An den hinteren Enden der unteren Profilrohre 27a,27b ist jeweils ein höhenverstellbares Stützrad 41a,41b an- bzw. aufsteckbar. Die Stützräder 41a,41b sind mit einer Spindel 43a,43b manuell mittels einer Kurbel höhenverstellbar, auch wenn die Stützräder 41 durch die Last 12 belastet sind. Zum erleichterten Rangieren der Vorrichtung am Boden, beim Hintransport zu dem Fahrzeug und beim Wegtransport von dem Fahrzeug lassen sich an den vorderen Seiten der unteren Profilrohre 27a,27b schwenkbare Rangierräder 45a,45b befestigen (Figur 5). Die Unterseite der Rangierräder 45a,45b ist um 3 bis 5 cm tiefer als die Unterseite der Transporträder 37. Dadurch sind die Transporträder angehoben und besitzen einen Abstand zum Boden, wenn die Rangierräder 45a,45b an den unteren Profilrohren 27a,27b befestigt sind. Die Vorrichtung 11 ist durch die angehobenen ersten Transporträder 37 einfach zu lenken, auch wenn hohe Lasten 12 damit befördert werden.

Die Haltevorrichtung zum Halten der Last 12 umfasst eine Seilwinde 47, die Welle 35, welche durch eine Kette 49 oder ein Seil mit der Seilwinde in Verbindung steht und Zugmittel 51. Durch Betätigung der Seilwinde 47 kann die Welle im oder gegen den Uhrzeigersinn verdreht werden. Die Zugmittel 51, welche in den Figuren als Gurte dargestellt sind, lassen sich an der Welle 35 auf- und abwickeln. Zur stabilen Halterung der an den Gurten 51 angehobenen Last 12 sind vier Gurte 51 vorgesehen, welche separat an der Welle 35 befestigt sind. Die Welle 35 ist in zwei Lagerböcken 53a,53b aufgenommen, welche an der Spitze der Dreiecke angeordnet sind.

Die Verladevorrichtung 11 umfasst auch ein erstes und ein zweites Paar Laufschienen 55, 57. Die ersten Laufschiene 55 sind auf der Ladefläche 14 des Transportfahrzeuges auflegbar und sind mit Vorsprüngen versehen, damit sie auf der Ladefläche 14 nicht verrutschen. Die ersten Laufschienen 55 ermöglichen es, dass die Rahmenkonstruktion auch mit einer grossen Last 12 auf der Ladefläche 14 verschiebbar ist. Um die Last 12 mit der Vorrichtung 11 auch auf weichem oder unebenen Boden zu dem Transortfahrzeug 13 oder von dem Transportfahrzeug 13 weg transportieren zu können, werden unter die Transporträder 37,39 bzw. die Rangierräder 45a,45b die zweiten Laufschienen 57 gelegt.

Die vorderen Profilrohre 23a,23b und die hinteren Profilrohre 25a,25b müssen nicht zwangsläufig gleich lang sein. Sind die vorderen Profilrohre 23a,23b beispielsweise länger als die hinteren Profilrohre 25a,25b, so lässt sich die Welle 35 weiter nach hinten verlagern. Dadurch kann die Last 12 in Richtung der Rückseite 19 verlagert sein.

Die erfindungsgemässe Ladevorrichtung 11 funktioniert wie folgt: Zuerst sind die Rangierräder 45a,45b an den Vorderseiten der unteren Profilrohre 27a,27b aufgesteckt, die Stützräder 41a,41b sind hingegen nicht montiert. Die Rahmenkonstruktion 15 wird über die Last 12 gestellt und die Gurte 51 werden an der Last 12 befestigt. Mittels der Seilwinde 47 oder des Kettenhubzuges wird die Last angehoben, sodass sie knapp über dem Boden schwebt. Nun wird die Ladevorrichtung 12 an dem hinteren Rangierbügel 31 zu dem Transportfahrzeug 13 geschoben. Es kann auch an dem vorderen Rangierbügel 29 gezogen werden. Falls es die Bodenbeschaffenheit erfordert, werden zur Erleichterung des Transportierens die zweiten Laufschienen 57 verwendet.

Die Ladevorrichtung 11 wird hinter dem Transportfahrzeug 13 abgestellt und die Last 12 mit der Seilwinde 47 abgesenkt. Nun werden die Rangierräder 45 abgenommen und die Stützräder 41a,41b auf den Rückseiten der unteren Profilrohre 27a,27b aufgesteckt. Die Rahmenkonstruktion 15 wird an der Vorderseite 17 auf die Ladefläche 14 gehoben, sodass die ersten Transporträder 37 auf den ersten Laufschienen 55 aufgesetzt werden. Die ersten Laufschienen 55 werden vorab auf der Ladefläche 14 derart aufgelegt, dass sie gegen Verschieben gesichert sind. Die ersten Laufschienen 55 haben an ihren hinteren Enden Vorsprünge, damit die ersten Transporträder 37 nicht versehentlich nach hinten aus den ersten Transportschienen 55 gleiten können.

Die Transporträder 37 haben an der Achsmitte einen Anschlagwinkel. Dieser greift hinter die Vorsprünge der Laufschienen 55. So wird ein Abrollen verhindert. An die Laufschienen 55 können seitliche Vorsprünge angebracht werden, die dann an den innenliegenden Radkästen ein verschieben der Laufschienen 55 auf der Ladefläche 14 verhindern. Die Höhe der Stützräder 41a,41b ist mit Hilfe der Spindeln 43a,43b vorab derart eingestellt, dass die Unterseite der zweiten Transporträder 1 bis 2 cm höher ist, als die Höhe der Ladefläche 14. Mit der Seilwinde 47 wird die Last 12 angehoben, bis die der Abstand der Unterseite der Last 12 zum Boden etwas grösser ist, als die Höhe der Ladefläche 14. Nun wird die Rahmenkonstruktion 15 an dem hinteren Rangierbügel 31 auf die Ladefläche 14 geschoben bis die zweiten Transporträder 39 über den ersten Laufschienen 55 zu liegen kommen. Zwei Bügelsicherungen 59, die über den Transporträdern 39 am Rahmen gelenkig angeordnet sind, werden über hinteren zweiten Vorsprünge der Laufschienen 55 geschoben und gleiten über die zweiten Vorsprünge. Die Bügelsicherungen 59 sind in schräg in Richtung der Stützräder 41a,41b orientiert, damit sie in Beladerichtung an den hinteren Vorsprüngen angehoben werden und in Entladerichtung an den hinteren Vorsprüngen anschlagen. Nach Überfahren der zweiten Vorsprünge werden die Bügelsicherungen automatisch abgesenkt. Ein Überfahren der zweiten Vorsprünge in die entgegengesetzte Entladerichtung ist durch die Bügel verhindert. So wird ein Abrollen der Ladevorrichtung 11 verhindert. Nun kann die Rahmenkonstruktion 15 durch das Betätigen der Spindeln 43a, 43b soweit abgesenkt werden, dass die Stützräder 41a,41b lastfrei werden. Die Last 12 liegt auf den ersten und zweiten Transporträdern 37,39 und die Stützräder 41a,41b können von den unteren Profilrohren 27a,27b abgezogen werden. Die Last kann an die gewünschte Position auf der Ladefläche 14 geschoben werden und auf der Ladefläche 14 durch Betätigung der Seilwinde 47 abgesetzt werden. Die Ladevorrichtung 11 kann von der Ladefläche 14 entfernt werden, um beispielsweise eine weitere Last zu laden.

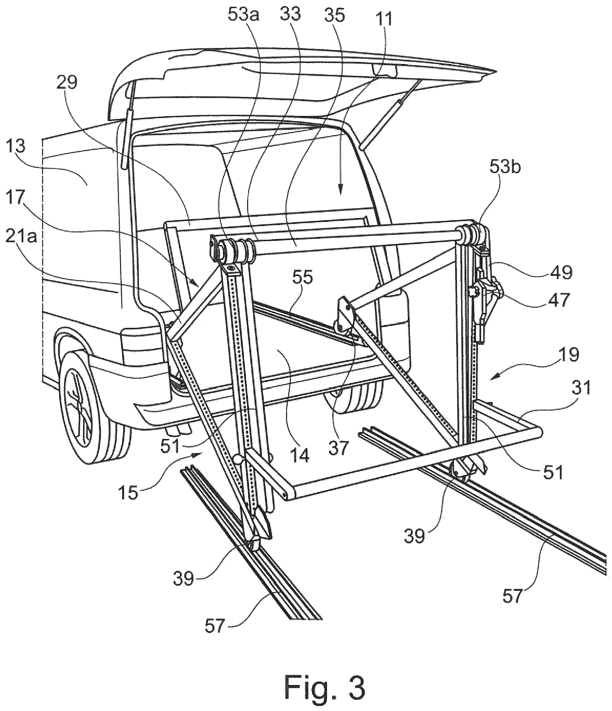

Das Ausladen der Last 12 erfolgt prinzipiell in umgekehrter Reihenfolge wie oben beschrieben. Die Ladevorrichtung 11 mit der angehobenen Last 12 wird auf der Ladefläche 14 nach hinten gezogen, bis die Rückseiten der unteren Profilrohre 27a,27b die Ladefläche 14 überragen. Die zwei Bügelsicherungen 59 schlagen hinter den Vorsprüngen der Laufschienen 55 an, um ein weiteres Rollen zu verhindern. Zum Überfahren der Vorsprünge müssen die Bügelsicherungen 59 manuell angehoben werden. Dann werden die Stützräder 41a,41b aufgesteckt und die Spindeln 43a,43b betätigt, bis die zweiten Transporträder 39 etwas angehoben sind. Die Ladevorrichtung 11 wird von der Ladefläche 14 gezogen, bis die ersten Transporträder 37 mit beiden Anschlagwinkeln an den Vorsprüngen der Laufschienen 55 anschlagen und ein Abrollen verhindern. Nun kann die Last 12 auf dem Boden abgesenkt werden. Ist die Ladevorrichtung 11 lastfrei, können die Stützräder 41a,41b abgenommen werden und die Rangierräder 45a,45b montiert werden. Nachdem die Ladevorrichtung 11 von der Ladefläche 14 auf den Boden gesetzt wurde (Figur 3) kann die Last 12 erneut angehoben werden und am Boden eventuell unter Zuhilfenahme der zweiten Laufschienen 57 auf einem weichen Boden transportiert werden.

### Legende:

- 11: Verladevorrichtung
- 12: Last
- 13: Transportfahrzeug
- 14: Ladefläche
- 15: Rahmenkonstruktion
- 17: Vorderseite der Rahmenkonstruktion
- 19: Rückseite der Rahmenkonstruktion
- 21a,27b: Erstes und zweites Seitenteil
- 23a,23b: Vordere Profilrohre
- 25a,25b: Hintere Profilrohre
- 27a,27b: Untere Profilrohre
- 29: Vorderer Rangierbügel
- 31: Hinterer Rangierbügel
- 33: Mittlerer Querstabilisator
- 35: Welle
- 37: Erstes Transportrad
- 39: Zweites Transportrad
- 41a,41b: Stützrad
- 43a,43b: Spindel
- 45a,45b: Rangierräder
- 47: Seilwinde / Kettenhubzug
- 49: Kette
- 51: Zugmittel, Gurte
- 53a,53b: Lagerböcke
- 55: Erste Laufschienen mit Vorsprungerhebung für Abrollsicherungen
- 57: Zweite Laufschienen
- 59: Bügelsicherung

## Patentansprüche

1. Verladevorrichtung (11) zum Ein- und Ausladen einer Last (12) in ein bzw. aus einem Transportfahrzeuges (13) und zum Transportieren einer Last (12) umfassend
- eine Rahmenkonstruktion (15) mit
- einer Vorderseite (17), welche beim Ein- und Ausladen dem Transportfahrzeug (13) zugewandt ist und
- einer Rückseite (19), welche beim Ein- und Ausladen dem Transportfahrzeug (13) abgewandt ist,
- wenigstens drei Transporträder (37,39), welche an der Rahmenkonstruktion (15) befestigt sind,
- eine Haltevorrichtung (47) zur Halterung sowie zum Heben und Senken der Last (12) an der Verladevorrichtung (11),
- wenigstens ein unter Last höhenverstellbares und an der Rückseite (19) angeordnetes Stützrad (41) an der Rückseite (19), dessen Höhe derart einstellbar ist, dass beim Ein- und Ausladen die Unterseite des wenigstens einen Stützrades (41) tiefer als die Unterseite der Transporträder (37,39) ist und die Höhendifferenz zwischen der Unterseite der Transporträder (37,39) und der Unterseite des Stützrades (41) im Wesentlichen der Höhe einer Ladefläche (14) entspricht,
**dadurch gekennzeichnet,**
**dass** das wenigstens eine höhenverstellbare Stützrad (41) an der Rückseite (19) lösbar befestigt ist.

2. Verladevorrichtung nach Anspruch 1, **dadurch gekennzeichnet, dass** die Verladevorrichtung (11) beim Ein- und Ausladen der Last manuell und ausschliesslich frei von der Last (12) auf die Ladefläche (14) hebbar ist und von der Ladefläche (14) herunterhebbar ist.

3. Verladevorrichtung nach Anspruch 1 oder 2, **dadurch gekennzeichnet, dass** die Verladevorrichtung ein Gesamtgewicht von höchstens 120 kg, bevorzugt von höchstens 100 kg und bevorzugt von höchstens 85 kg aufweist.

4. Verladevorrichtung nach einem der vorangehenden Ansprüche, **dadurch gekennzeichnet, dass** die Verladevorrichtung (11) ein erstes Seitenteil (21a) und ein zweites Seitenteil (21b) umfasst, welche durch Querstreben (29,31,33) lösbar miteinander verbunden sind.

5. Verladevorrichtung nach Anspruch 4, **dadurch gekennzeichnet, dass** an dem ersten und zweiten Seitenteil (21a,21b) jeweils ein erstes und ein zweites Transportrad (37,39) und ein Stützrad (41a,41b) befestigt sind, wobei das Stützrad (41a,41b) ausserhalb der Transporträder (37,39) an der Rückseite des ersten oder zweiten Seitenteils (21a,21b) angeordnet ist.

6. Verladevorrichtung nach einem der vorangehenden Ansprüche, **dadurch gekennzeichnet, dass** das wenigstens eine Stützrad (41a,41b) mit einer manuell bedienbaren Spindel (43a,43b) höhenverstellbar ist.

7. Verladevorrichtung nach einem der vorangehenden Ansprüche, **dadurch gekennzeichnet, dass** die Haltevorrichtung und der Hebevorgang mit einer Seilwinde (47) realisiert sind, an welcher eine Last (12) relativ zu der Verladevorrichtung (11) vertikal anhebbar und absenkbar ist.

8. Verladevorrichtung nach einem der Ansprüche 4 bis 7, **dadurch gekennzeichnet, dass** die Querstreben einen vorderen und einen hinteren Rangierbügel (29,31), einen mittleren Querstabilisator (33) und eine Welle (35) umfassen, welche Welle (35) Teil der Haltevorrichtung ist.

9. Verladevorrichtung nach Anspruch 8, **dadurch gekennzeichnet, dass** Zugmittel (51) an der Welle (35) an ihren Enden und ihrer Mitte gehalten und aufgerollt werden können.

10. Verladevorrichtung nach einem der Ansprüche 4 bis 9, **dadurch gekennzeichnet, dass** das erste und zweite Seitenteil (21a,21b) jeweils aus drei Profilrohren (23a,23b,25a,25b,27a,27b) zu einem Dreieck mit einer vorderen, einer hinteren und einer oberen Ecke aufgebaut sind.

11. Verladevorrichtung nach Anspruch 10, **dadurch gekennzeichnet, dass** der vordere Schenkel (23) des Dreiecks länger als der hintere Schenkel (25) des Dreiecks ist.

12. Verladevorrichtung nach einem der vorangehenden Ansprüche, **dadurch gekennzeichnet, dass** an der Vorderseite (17) ein schwenkbares Rangierrad (45) ansteckbar ist.

13. Verladevorrichtung nach einem der vorangehenden Ansprüche, **dadurch gekennzeichnet, dass** die Verladevorrichtung (11) ein erstes und zweites Paar von Laufschienen (55,57) umfasst, wobei das erste Laufschienenpaar (55) Mittel zur Halterung an einer Ladefläche (14) aufweist.

14. Verladevorrichtuxtg nach Anspruch 13, **dadurch gekennzeichnet, dass** die Verladevorrichtung erste vordere und zweite hintere Transporträder (37,39) umfasst und die Halterungen der ersten Transporträder (37,39) erste Vorsprünge aufweisen, welche mit Vorsprüngen am ersten Paar von Laufschienen (55) zusammenwirken, um eine erste Abrollsicherung für die Ladevorrichtung zu bilden.

15. Verladevorrichtung nach Anspruch 14, **dadurch gekennzeichnet, dass** oberhalb der zweiten Transporträder (39) bewegliche Bügel (59) angeordnet sind, welche mit an den Laufschienen (55) vorgesehenen zweiten Vorsprüngen zusammenwirken, um eine zweite Abrollsicherung zu realisieren.
